# EUROPEAN PATENT SPECIFICATION

(11) **EP 3 611 038 B1**
(45) Date of publication and mention of the grant of the patent: **15.03.2023**
(21) Application number: 18784322.2
(22) Date of filing: 19.03.2018
(51) Int. Cl.: B60C 11/12, B60C 11/03, B60C 11/13

(54) **HEAVY DUTY PNEUMATIC RADIAL TIRE**
SCHWERLASTRADIALLUFTREIFEN
PNEUMATIQUE RADIAL POUR POIDS LOURDS

(30) Priority: 10.04.2017 JP 2017077530
(43) Date of publication of application: 19.02.2020
(73) Proprietor: Bridgestone Corporation, Tokyo 104-8340 (JP)
(72) Inventor: OKAZAKI Naoto, Tokyo 104-8340 (JP)
(74) Representative: Marks & Clerk LLP
(86) International application number: PCT/JP2018/010759
(87) International publication number: WO 2018/190078

(56) References cited:
- EP-A1- 2 974 887
- EP-A2- 1 870 258
- WO-A1-2010/063751
- JP-A- H05 147 409
- JP-A- H05 147 409
- JP-A- H09 226 312
- JP-A- H11 170 817
- JP-A- 2000 229 504
- JP-A- 2001 219 715
- JP-A- 2003 159 910
- JP-A- 2003 205 710
- JP-A- 2006 321 342
- JP-A- 2006 321 342
- JP-A- 2007 223 493
- JP-A- 2007 223 493
- JP-A- 2010 234 895
- JP-A- 2011 251 650
- JP-A- 2014 237 398
- JP-A- 2015 024 818
- JP-A- 2017 024 666
- US-B1- 6 467 517

## Description

### [Technical Field]

The present invention relates to a heavy load pneumatic radial tire having a block that contacts a road surface, and a crossing belt layer arranged at an inner side in a tire radial direction with respect to the block.

### [Background Art]

Conventionally, a pneumatic tire mounted to a vehicle such as an automobile adopts various tread patterns in order to improve braking performance. For example, it is known that, in a pneumatic tire having a block in which a sipe extended in a tire width direction is formed, a recess portion recessed to be an internal corner shape along the sipe is formed on a tread portion of the block in which the sipe is formed (for example, Patent Literature 1).

According to such a pneumatic tire, an edge component is improved by the recess portion, so that the braking performance on an ice can be particularly improved. Attention is also drawn to the disclosures of EP2974887A1, JP2017-024666A, JP2007-223493A, JPH05-147409A, JP2006-321342A and WO2010/063751A1.

### [Citation List]

### [Patent Literature]

[PTL 1] Japanese Unexamined Patent Application Publication No. 2009-190677

### [Summary of Invention]

A pneumatic radial tire for buses or trucks, which is a so-called heavy load pneumatic radial tire, also widely adopts a block in which a sipe extended in a tire width direction is formed, in order to improve braking performance and other performance (for example, wear resistance, low rolling resistance).

In the heavy load pneumatic radial tire, a relatively heavy load is applied compared to a pneumatic tire mounted to a passenger vehicle, and therefore a deformation amount of the block is apt to be larger especially in braking. Accordingly, deformation of an end portion of the block at a step-in side of the tire (so-called winding deformation) becomes large in braking, and therefore contact performance of the block is deteriorated. Such a phenomenon interrupts the improvement of the braking performance.

Accordingly, an object of the present invention is, in consideration of the problem described above, to provide a heavy load pneumatic radial tire capable of further improving braking performance by improving contact performance of a block in braking.

A heavy load pneumatic radial tire according to the present invention is provided as claimed in claim 1.

### [Brief Description of Drawings]

[Fig. 1] Fig. 1 is a cross-sectional view along a tire width direction and a tire radial direction of a heavy load pneumatic radial tire.
[Fig. 2] Fig. 2 is a developed plane view of a part of a tread 20.
[Fig. 3] Fig. 3 is a perspective view of a block 100.
[Fig. 4] Fig. 4 is a plane view of the block 100.
[Fig. 5] Fig. 5 is a side view of the block 100.
[Fig. 6] Fig. 6 is an enlarged side view of a part of the block 100.
[Fig. 7A] Fig. 7A is a schematic view of whole deformation of the block 100 in braking.
[Fig. 7B] Fig. 7B is a schematic view of whole deformation of the block 100 in braking.
[Fig. 7C] Fig. 7C is a schematic view of whole deformation of the block 100 in braking.
[Fig. 8A] Fig. 8A is a schematic view of deformation of the block at an end portion at a kick-out side of the block in braking.
[Fig. 8B] Fig. 8B is a schematic view of deformation of the block at an end portion at the kick-out side of the block in braking.
[Fig. 9] Fig. 9 is a side view of a block 100A according to a modified example.
[Fig. 10] Fig. 10 is a developed view of a part of a tread 20A according to an embodiment of the present invention.

### [Description of Examples]

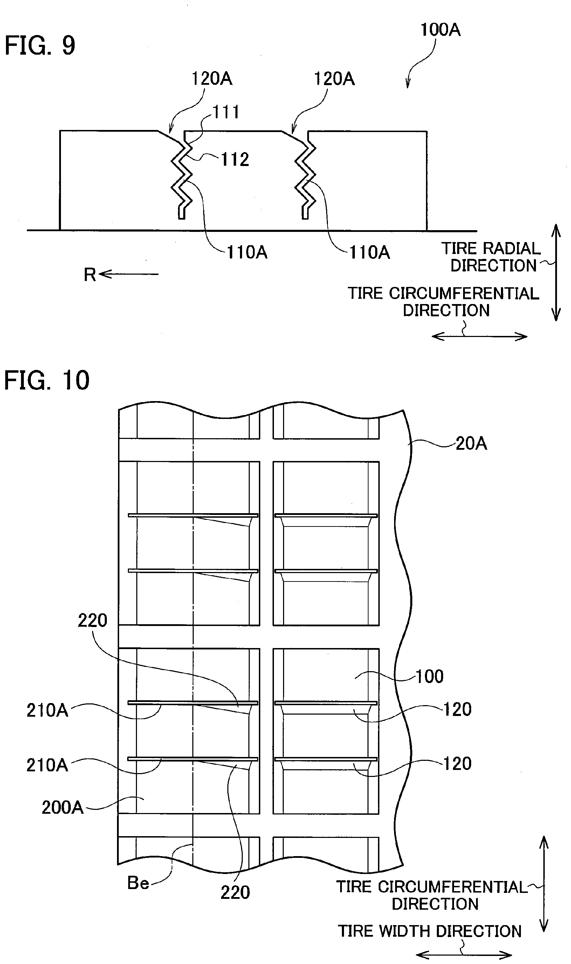

It is noted that out of the above figures, it is only fig. 10 which shows distinguishing features of the invention according to claim 1.

Hereinafter, examples of the present invention will be described with reference to the drawings. The same reference signs or similar reference signs are assigned to the same functions or the same components and the description thereof is omitted as needed.

### (1) Whole configuration of heavy load pneumatic radial tire

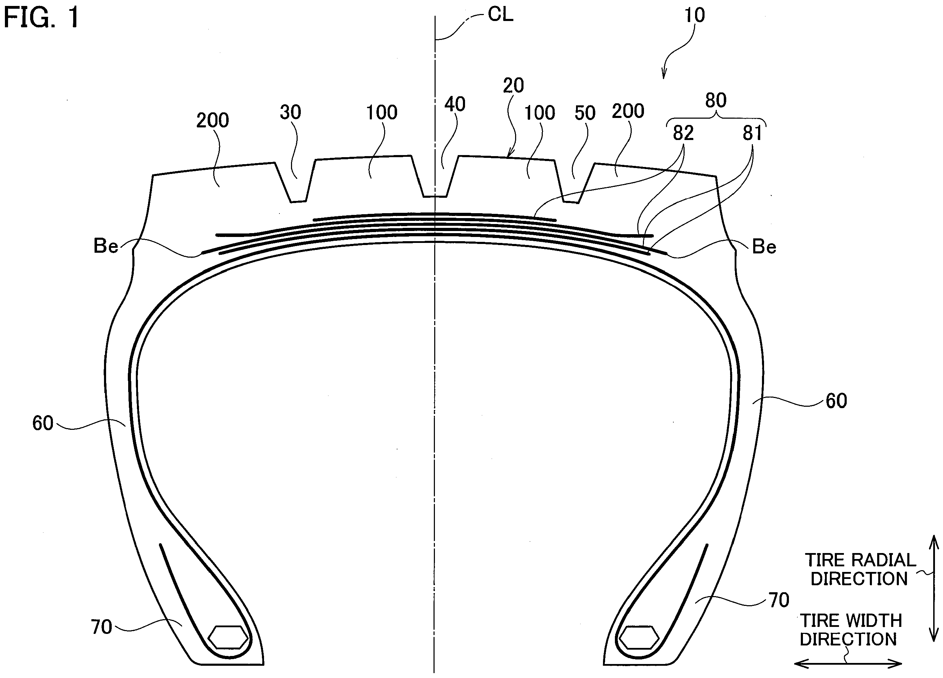

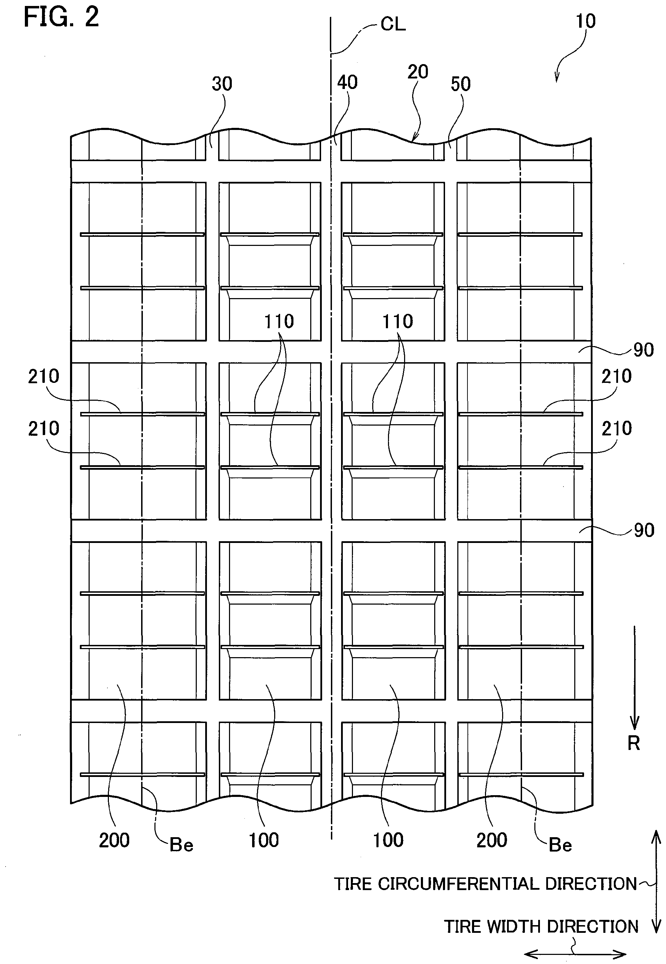

Fig. 1 is a cross-sectional view along a tire width direction and a tire radial direction of a heavy load pneumatic radial tire 10 according to the present example, which is not according to the present invention, but is useful for understanding the present invention. Fig. 2 is a developed plane view of a part of a tread 20.

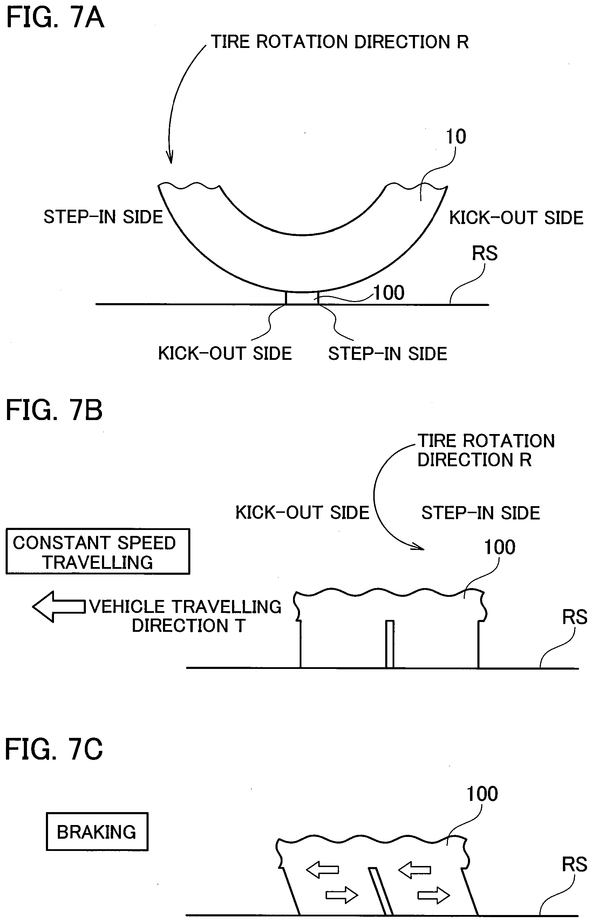

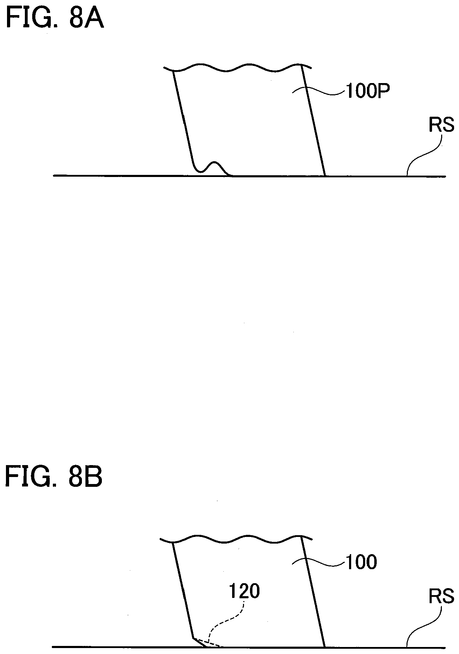

As shown in Fig. 1 and Fig. 2, the heavy load pneumatic radial tire 10 is provided with the tread 20 that contacts a road surface RS (not shown in Fig. 1 and Fig. 2, see Figs. 7A to 7C and Figs. 8A and 8B). The heavy load pneumatic radial tire 10 is further provided with a tire side portion 60 continued to the tread 20, and a bead portion 70 mounted to a wheel rim.

The heavy load pneumatic radial tire 10 is preferably used mainly in trucks or buses. The heavy load pneumatic radial tire 10 is provided with a belt layer 80 formed by a plurality of belts. The belt layer 80 is formed by a crossing belt layer 81 arranged at an inner side in the tire radial direction, and a reinforcing belt layer 82 arranged at an outer side in the tire radial direction with respect to the crossing belt layer 81. The belt layer 80 is arranged at the inner side in the tire radial direction of a block 100 formed in the tread 20.

The crossing belt layer 81 is formed by two belts with orientation directions of tire cords (not shown) crossing each other. The reinforcing belt layer 82 is arranged to secure strength and durability required in the heavy load pneumatic radial tire 10. In the present example, the crossing belt layer 81 is formed by two belts, however the number of the belts is not especially limited. Further, the reinforcing belt layer 82 is not always necessary depending on a use of the heavy load pneumatic radial tire 10.

A plurality of circumferential direction grooves extended in a tire circumferential direction, specifically circumferential direction grooves 30, 40, 50, are formed in the tread 20.

The circumferential direction groove 40 is formed at a position including a tire equatorial line CL. The circumferential direction grooves 30, 50 are respectively formed at outer sides in the tire width direction of the circumferential direction groove 40 with respect to the tire equatorial line CL.

A plurality of the blocks 100 and a plurality of blocks 200, each of which contacts the road surface RS (see Figs. 7A to 7C and Figs. 8A and 8B), are formed in the tread 20.

The block 100 is defined by the circumferential direction grooves 30, 40, 50 extended in the tire circumferential direction, and a width direction groove 90 extended in the tire width direction. The blocks 200 are formed at the outer sides in the tire width direction of the block 100, respectively. A surface (tread) of each of the block 100 and the block 200 contacts the road surface RS (see Figs. 7A to 7C and Figs. 8A and 8B).

A sipe 110 extended in the tire width direction is formed in the block 100. Similarly, a sipe 210 extended in the tire width direction is formed in the block 200. Here, the sipe denotes a narrow groove closed in a ground contact surface of the blocks 100, 200. An opening width of the sipe in a non-contact state is not especially limited but preferably set in a range between 0.1 mm and 1.5 mm.

Each of plural blocks 100 and plural blocks 200 are arranged along the tire circumferential direction so as to form a block row extended in the tire circumferential direction.

### (2) Shape of block 100

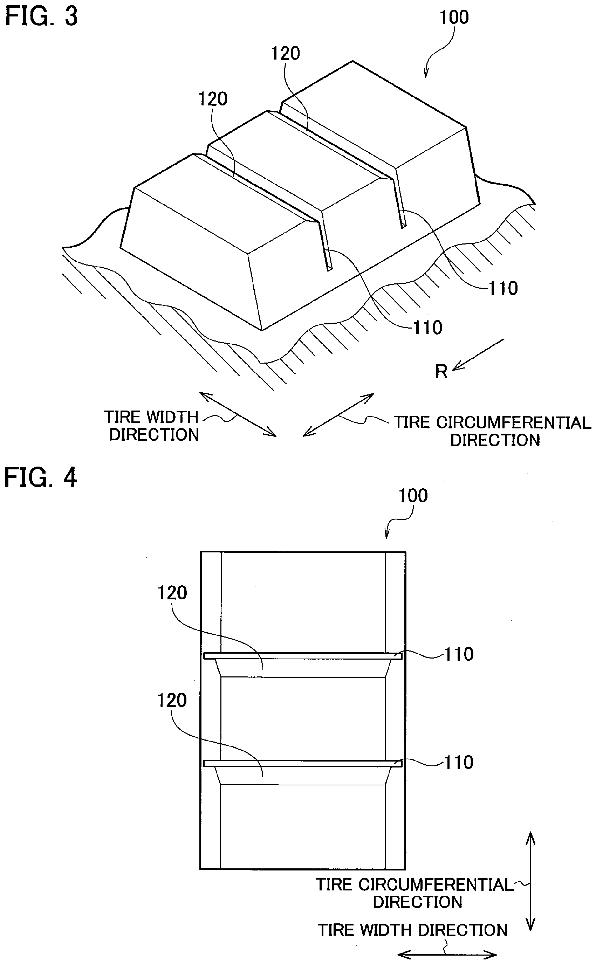

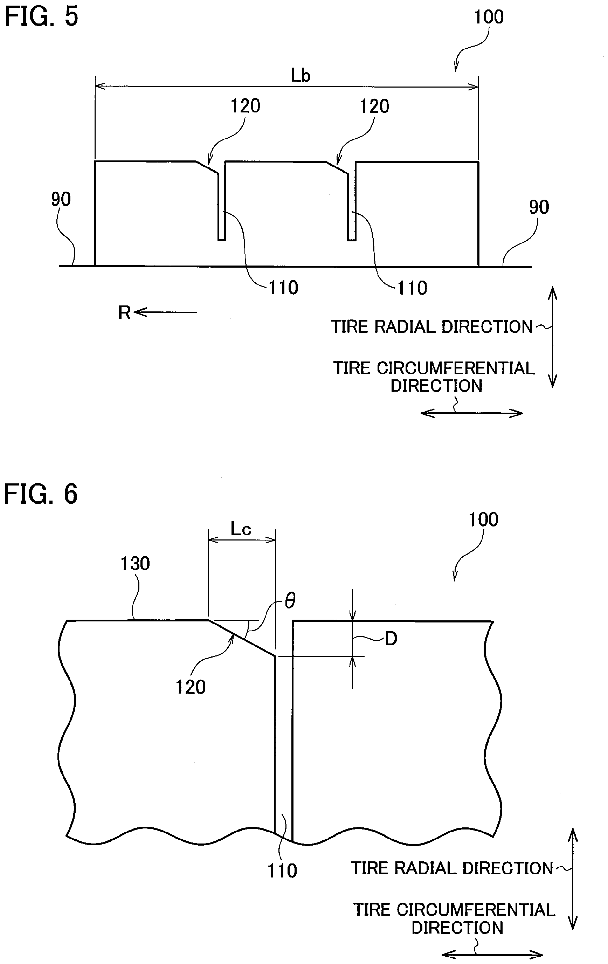

Next, a shape of the block 100 will be described. Fig. 3 is a perspective view of the block 100. Fig. 4 is a plane view of the block 100. Fig. 5 is a side view of the block 100.

As shown in Fig. 3 to Fig. 5, an inclined portion 120 is formed on one end portion in the tire circumferential direction of the block 100 defined by the sipe 110. The inclined portion 120 is formed by chamfering the one end portion in the circumferential direction of the block 100 so as to be inclined inward from an outer side in the tire radial direction to an inner side in the tire radial direction.

Specifically, the inclined portion 120 is formed on the end portion at a kick-out side of the block 100.

The end portion at the kick-out side of the block 100 denotes an end portion at a step-in side of the whole tire with respect to a rotation direction R of the heavy load pneumatic radial tire 10, namely an end portion in a vehicle travelling direction T (not shown in Fig. 3 to Fig. 5, see Fig. 7A). Accordingly, the end portion at the kick-out side of the block 100 is different from an end portion at a kick-out side of the heavy load pneumatic radial tire 10 (an opposite end portion in the vehicle travelling direction T). The end portion at the kick-out side of the block 100 is further described below.

As described above, the inclined portion 120 is formed by chamfering the end portion at the kick-out side of the block 100 so as to be inclined inward from the outer side in the tire radial direction to the inner side in the tire radial direction. That is, the inclined portion 120 is a flat inclined surface formed by chamfering the one end portion in the tire circumferential direction of the block 100 defined by the sipe 110. The inclined portion 120 may be called a chamfered portion or a cut-off portion (chamfer).

The inclined portion 120 is formed in a region where the crossing belt layer 81 is formed, in the tire width direction (see Fig. 1 and Fig. 2). Specifically, the block 100 in which the inclined portion 120 is formed, is arranged at an inner side of a belt end Be of the crossing belt layer 81, in the tire width direction. Here, the belt end Be denotes an end portion of the belt extended to an outermost side in the tire width direction among two belts forming the crossing belt layer 81.

Fig. 6 is an enlarged side view of a part of the block 100. As shown in Fig. 6, an angle θ of the inclined portion 120 against a tread 130 of the block 100 in a tire width direction view is preferably set in a range between 15 degrees and 35 degrees. Here, the tread 130 denotes a surface portion of the block 100, contacting the road surface RS (see Figs. 7A to 7C and Figs. 8A and 8B).

Further, a ratio (Lc / Lb × 100) of a length Lc of the inclined portion 120 in the tire circumferential direction to a length Lb (see Fig. 5) of the block 100 in the tire circumferential direction is preferably set in a range between 2% and 13%.

### (3) Functions and effects

Next, functions and effects of the heavy load pneumatic radial tire 10 will be described. Figs. 7A to 7C are schematic views of whole deformation of the block 100 in braking.

As shown in Fig. 7A, when the heavy load pneumatic radial tire 10 mounted to the vehicle rotates in the rotation direction R so that the heavy load pneumatic radial tire 10 rolls on the road surface RS, the vehicle travels in the vehicle travel direction T.

Here, the step-in side of the heavy load pneumatic radial tire 10 (hereinafter, referred to as tire) denotes an end portion in the vehicle travel direction T, in the tire circumferential direction. On the other hand, the kick-out side of the tire denotes an opposite end portion in the vehicle travel direction T, in the tire circumferential direction.

Here, the step-in side and the kick-out side of the block 100 are opposite to the step-in side and the kick-out side of the tire, respectively. That is, as shown in Fig. 7A, the step-in side of the block 100 is opposite to a side of the vehicle travel direction T, and the kick-out side of the block 100 is a side of the vehicle travel direction T.

Fig. 7B shows a shape of the block 100 in a state in which the vehicle is traveling at a constant speed. While, Fig. 7C shows a shape of the block 100 in a state in which the vehicle is braking. As shown in Fig. 7C, when the vehicle is braking, deceleration G is generated in the vehicle travel direction T, and therefore stress along arrows shown in the figure is generated in the block 100.

Specifically, the stress opposite to the vehicle travel direction T is generated in a portion of the block 100 adjacent to the road surface RS, and the stress along the vehicle travel direction T is generated in a portion of the block 100 at the inner side in the tire radial direction. Thus, the block 100 is deformed to be a parallelogram-like shape.

Fig. 8A and Fig. 8B show schematic views of deformation of the block at the end portion at the kick-out side of the block in braking.

Specifically, Fig. 8A shows deformation of a block 100P in which the inclined portion 120, which is formed in the block 100, is not formed. Fig. 8B shows deformation of the block 100 in which the inclined portion 120 is formed.

As shown in Fig. 8A, in the block 100P in which the inclined portion 120 is not formed, namely in which an end portion formed in a rectangular shape in the tire width direction is formed, the end portion at the kick-out side of the block 100P is deformed to be wound toward the inner side in the tire radial direction, namely "winding deformation" is generated, due to the stress generated in braking as shown in Fig. 7B. Thus, the end portion at the kick-out side of the block 100P is raised from the road surface RS, and thereby the contact (contact performance) with the road surface RS is not sufficiently obtained. Such a phenomenon causes the braking distance to be longer.

On the other hand, as shown in Fig. 8B, in the block 100 in which the inclined portion 120 is formed, when the block 100 is deformed in braking, a surface of the inclined portion 120, which does not contact the road surface RS in a constant speed travelling, is brought into contact with the road surface RS, and thereby the winding deformation is not hardly generated. Furthermore, the surface of the inclined portion 120 contacts the road surface RS so that a friction coefficient (braking µ) of a whole of the block 100 in braking is improved. With this, the braking distance can be shortened.

Next, a result of a comparison test of the heavy load pneumatic radial tire 10 will be described. Table 1 shows the result of the comparison test of a conventional example, a comparative example, and examples 1 and 2.

**Table 1**

| | Braking distance index |
|---|---|
| Conventional example (reference) | 100 |
| Example 1 (whole region of tread) | 95 |
| Example 2 (inside region of crossing belt layer) | 87 |
| Comparative example (outside region of crossing belt layer) | 103 |

As shown in Table 1, the conventional example is a heavy load pneumatic radial tire having the block 100P (see Fig. 8B) in which the inclined portion 120 is not formed.

The example 1 is a heavy load pneumatic radial tire having the block in which the inclined portion 120 is formed, the block being formed in a whole region of the tread. The example 2 is a heavy load pneumatic radial tire having the block 100 in which the inclined portion 120 is formed in a region where the crossing belt layer 81 is formed, similar to the heavy load pneumatic radial tire 10 described above.

The comparative example is a heavy load pneumatic radial tire having the block in which the inclined portion 120 is formed only outside a region where the crossing belt layer 81 is formed.

A test condition is as described below.

Test vehicle: truck (2-2D)
Tire size: 315/70R22.5
Inner air pressure: 630 kPa

In the comparison test, the braking distance from a speed of 60 km/h of the truck until the truck stops was measured. The value in Table 1 is indexed against a reference (100) defined by the conventional example. As the value is smaller, the braking distance is shorter.

In the example 2 (a configuration similar to the heavy load pneumatic radial tire 10), the braking distance is shortened by 13% compared to that of the conventional example. Further, in the example 1, the braking distance is shortened by 5%.

On the other hand, even though the comparative example has the block in which the inclined portion 120 is formed outside the region where the crossing belt layer 81 is formed, the braking distance is not shortened. The reason is specifically described below. That is, the region where the inclined portion 120 is formed is large in tensile force in the tire radial direction compared to other region, and therefore the winding deformation is easily generated. While the region where the inclined portion 12 is not formed is not so large in the tensile force, and therefore the winding deformation is hardly generated and thereby the braking µ is easily improved by bringing the whole of the block into contact with the road surface RS without forming the inclined portion 120.

As described above, in the heavy load pneumatic radial tire 10, the inclined portion 120, which is formed by chamfering the end portion at the kick-out side of the block 100 so as to be inclined inward from the outer side in the tire radial direction to the inner side in the tire radial direction, is formed in the region where the crossing belt layer 81 is formed, and thereby the winding deformation of the block 100 is suppressed in braking and the braking µ can be improved. In particular, in a case in which rubber having low rolling resistance is adopted in the tread rubber, rigidity of the block 100 is apt to be deteriorated and therefore the winding deformation is easily generated. Even in such a case, the winding deformation can be suppressed effectively.

That is, according to the heavy load pneumatic radial tire 10, the braking performance can be improved by improving the contact performance in braking of the block 100.

Further, in the present example, the inclined portion 120 is formed only in the region where the crossing belt layer 81 is formed, in the tire width direction. With this, the braking µ can be improved as a whole of the tread 20, and thereby the braking performance can be further improved.

In the present example, the angle θ of the inclined portion 120 is set in a range between 15 degrees and 35 degrees. Further, the ratio (Lc / Lb × 100) of the length Lc of the inclined portion 120 in the tire circumferential direction to the length Lb of the block 100 in the tire circumferential direction is set in a range between 2% and 13%.

With this, the inclined portion 120 can contact the road surface RS sufficiently in braking, and therefore the braking µ can be firmly improved while suppressing the winding deformation.

### (4) Other examples

The block 100 may be modified as below. Fig. 9 is a side view of a block 100A according to a modified example. As shown in Fig. 9, a sipe 110A extended in the tire width direction is formed in the block 100A.

In the tire width direction view, the sipe 110A is formed in a zigzag shape such that the sipe 110A is bent in the tire circumferential direction toward an inner side in the tire radial direction. Specifically, the sipe 110A includes a first bent portion 111 and a second bent portion 112 in the tire width direction view.

The first bent portion 111 is extended in the same direction as an inclined direction of an inclined portion 120A. The second bent portion 112 is communicated with the first bent portion 111. The second bent portion 112 is arranged at the inner side in the tire radial direction with respect to the first bent portion 111 so as to be extended in an opposite direction to the first bent portion 111.

According to the block 100A, the falling of the block 100A in braking is suppressed by the sipe 110A formed in a zigzag shape having a plurality of the bent portions. Consequently, the winding deformation of the block 100A in an end portion at the kick-out side of the block 110A is also suppressed and thereby the braking µ is easily improved.

In particular, the first bent portion 111 is extended in the same direction as the inclined direction of the inclined portion 120A and the second bent portion 112 is extended in the opposite direction to the first bent portion 111, and thereby both of the falling deformation of the block 100A and the winding deformation of the block 100A in the end portion at the kick-out side of the block 100A can be effectively suppressed.

Fig. 10 is a developed view of a part of a tread 20A according to an embodiment of the present invention. As shown in Fig. 10, the tread 20A has the block 100 similar to that of the heavy load pneumatic radial tire 10, and a block 200A in which an inclined portion 220 is formed.

The block 200A is defined by a sipe 210A extended in the tire width direction. The inclined portion 220 is formed on one end portion in the tire circumferential direction of the block 200A defined by the sipe 210A.

Similar to the inclined portion 120, the inclined portion 220 is formed by chamfering one end portion (end portion at the kick-out side of the block) of the block 200A in the circumferential direction so as to be inclined inward from the outer side in the tire radial direction to the inner side in the tire radial direction. The inclined portion 220 becomes narrower toward the outer side in the tire width direction and disappears at the belt end Be of the crossing belt layer 81.

In this way, the inclined portion formed by chamfering may be formed in a whole region where the crossing belt layer 81 is formed. According to the heavy load pneumatic radial tire having the block 200A, the braking µ can be improved while suppressing the winding deformation of the block 100 and the block 200A in braking as much as possible.

Further, in the heavy load pneumatic radial tire 10, the rotation direction R is designated, however the rotation direction R may not be designated. In such a case, the inclined portion 120 may be formed at an appropriated ratio on one end portion or another end portion in the tire circumferential direction of the block 100.

In the heavy load pneumatic radial tire 10, the block 100 is formed in a rectangular shape and the sipe 110 is formed in a linear shape extended in the tire width direction. However, the block 100 and the sipe 110 are not limited to such shapes. For example, the block 100 may be formed in a parallelogram -like shape, and the sipe 110 may be slightly curved, or may be inclined so as not to be parallel to the tire width direction.

In the heavy load pneumatic radial tire 10, the block 100 is defined from the adjacent block 100 by the width direction groove 90.

However, according to an example not being covered by the present invention, the width direction groove 90 may not be formed, and in such a case, only the sipe extended in the tire width direction may be formed in the block formed in a rib-like shape extended in the tire circumferential direction.

As described above, examples of the present invention are described, however the present invention is not limited to the description and the drawings forming a part of the present application. Various modifications, examples, and operation techniques according the present invention defined by the appended claims will be apparent from the present application to a person skilled in the art.

### [Industrial Applicability]

The heavy load pneumatic radial tire according to the present invention is useful because the contact performance of the block in braking is improved and thereby the braking performance is further improved.

### [Reference Signs List]

10: heavy load pneumatic radial tire
20, 20A: tread
30, 40, 50: circumferential direction groove
60: tire side portion
70: bead portion
80: belt layer
81: crossing belt layer
82: reinforcing belt layer
90: width direction groove
100, 100A, 100P: block
110, 110A: sipe
111: first bent portion
112: second bent portion
120, 120A: inclined portion
130: tread
200, 200A: block
210, 210A: sipe
220: inclined portion

## Claims

1. A heavy load pneumatic radial tire (10) comprising:
a tread (20A) comprising blocks (100, 200A) that contact a road surface (RS), the blocks (100, 200A) being arranged in block rows extending in the tire circumferential direction, each block row comprising a plurality of blocks (100, 200A) arranged along the tire circumferential direction, each of the blocks (100) of a first block row out of the block rows being defined by circumferential direction grooves extending in the tire circumferential direction and width direction grooves extending in the tire width direction, and each of the blocks (200A) of a second block row out of the block rows being formed at the outer sides in the tire width direction of the blocks (100) of the first block row, respectively, and being defined by a circumferential direction groove extending in the tire circumferential direction and width direction grooves extending in the tire width direction; and
a crossing belt layer (81) arranged at an inner side in a tire radial direction with respect to the blocks (100, 200A),
wherein:
a sipe (110, 210A) extended in a tire width direction is formed in each block (100, 200A) to define smaller blocks;
an inclined portion (120, 220) is formed in each block (100, 200A) on an end portion at a kick-out side of a smaller block defined by the sipe (110, 210A) at the transition between the radial end of the sipe (110, 210A) and the ground contact surface of the smaller block;
the inclined portion (120, 220) is formed by chamfering the end portion at the kick-out side so as to be inclined inward from an outer side in the tire radial direction to an inner side in the tire radial direction;
the inclined portion (120, 220) is formed in a region where the crossing belt layer (81) is formed, in the tire width direction; and
the inclined portion (220) of the blocks (200A) of the second block row becomes narrower toward the outer side in the tire width direction and disappears at the belt end (Be) of the crossing belt layer (81).

2. The heavy load pneumatic radial tire (10) according to claim 1, wherein an angle of the inclined portion (120) against a tread (20A) of the blocks (100) of the first block row in a tire width direction view is set in a range between 15 degrees and 35 degrees.

3. The heavy load pneumatic radial tire (10) according to claim 1 or 2, wherein a ratio of a length of the inclined portion (120) in the tire circumferential direction to a length of the blocks (100) of the first block row in the tire circumferential direction is set in a range between 2% and 13%.

4. The heavy load pneumatic radial tire (10) according to any one of claims 1 to 3, wherein the sipe (110A) of the blocks (100) of the first block row is formed in a zigzag shape such that the sipe (110A) is bent in the tire circumferential direction toward an inner side in the tire radial direction, in a tire width direction view.

5. The heavy load pneumatic radial tire (10) according to claim 4, wherein in the tire width direction view:
the sipe (110A) of the blocks (100) of the first block row includes a first bent portion (111) and a second bent portion (112);
the first bent portion (111) is extended in the same direction as an inclined direction of the inclined portion (120A); and
the second bent portion (112) is communicated with the first bent portion (111) and arranged at the inner side in the tire radial direction with respect to the first bent portion (111) so as to be extended in an opposite direction to the first bent portion (111).

## Patentansprüche

1. Schwerlast-Radialluftreifen (10), der Folgendes umfasst:
eine Lauffläche (20A), die Blöcke (100, 200A) umfasst, die eine Straßenoberfläche (RS) berühren, wobei die Blöcke (100, 200A) in Blockreihen angeordnet sind, die sich in der Reifenumfangsrichtung erstrecken, wobei jede Blockreihe eine Vielzahl von Blöcken (100, 200A) umfasst, die entlang der Reifenumfangsrichtung angeordnet sind, wobei jeder der Blöcke (100) einer ersten Blockreihe von den Blockreihen durch Umfangsrichtungsrillen, die sich in der Reifenumfangsrichtung erstrecken, und Breitenrichtungsrillen, die sich in der Reifenbreitenrichtung erstrecken, definiert wird und jeder der Blöcke (200A) einer zweiten Blockreihe von den Blockreihen an den in der Reifenbreitenrichtung äußeren Seite der Blöcke(100) der ersten Blockreihe geformt ist und durch eine Umfangsrichtungsrille, die sich in der Reifenumfangsrichtung erstreckt, und Breitenrichtungsrillen, die sich in der Reifenbreitenrichtung erstrecken, definiert wird, und
eine kreuzende Gürtellage (81), die an einer in Bezug auf die Blöcke (100, 200A) in einer Reifenradialrichtung inneren Seite angeordnet ist,
wobei:
eine Lamelle (110, 210A), die sich in einer Reifenbreitenrichtung erstreckt, in jedem Block (100, 200A) geformt ist, um kleinere Blöcke zu definieren,
ein geneigter Abschnitt (120, 220) in jedem Block (100, 200A) an einem Endabschnitt an einer Ausstoßseite eines kleineren Blocks geformt ist, der durch die Lamelle (110, 210A) an dem Übergang zwischen dem radialen Ende der Lamelle (110, 210A) und der Bodenberührungsfläche des kleineren Blocks definiert ist,
der geneigte Abschnitt (120, 220) durch Abschrägen des Endabschnitts an der Ausstoßseite so geformt ist, dass er von einer in der Reifenradialrichtung äußeren Seite zu einer in der Reifenradialrichtung inneren Seite nach innen geneigt ist,
der geneigte Abschnitt (120, 220) in einem Bereich geformt ist, wo die kreuzende Gürtellage (81) geformt ist, in der Reifenbreitenrichtung, und
der geneigte Abschnitt (220) der Blöcke (200A) der zweiten Blockreihe hin zu der in der Reifenbreitenrichtung äußeren Seite schmaler wird und an dem Gürtelende (Be) der kreuzenden Gürtellage (81) verschwindet.

2. Schwerlast-Radialluftreifen (10) nach Anspruch 1, wobei ein Winkel des geneigten Abschnitts (120) gegenüber einer Lauffläche (20A) der Blöcke (100) der ersten Blockreihe in einer Ansicht in Reifenbreitenrichtung in einem Bereich zwischen 15 Grad und 35 Grad festgesetzt ist.

3. Schwerlast-Radialluftreifen (10) nach Anspruch 1 oder 2, wobei ein Verhältnis der Länge des geneigten Abschnitts (120) in der Reifenumfangsrichtung zu einer Länge der Blöcke (100) der ersten Blockreihe in der Reifenumfangsrichtung in einem Bereich zwischen 2 % und 13 % festgesetzt ist.

4. Schwerlast-Radialluftreifen (10) nach einem der Ansprüche 1 bis 3, wobei die Lamelle (110A) der Blöcke (100) der ersten Blockreihe derart in einer Zickzackform geformt ist, dass die Lamelle (110A) in der Reifenumfangsrichtung hin zu einer in der Reifenradialrichtung inneren Seite, in einer Ansicht in Reifenbreitenrichtung, gebogen ist.

5. Schwerlast-Radialluftreifen (10) nach Anspruch 4, wobei in der Ansicht in Reifenbreitenrichtung:
die Lamelle (110A) der Blöcke (100) der ersten Blockreihe einen ersten gebogenen Abschnitt (111) und einen zweiten gebogenen Abschnitt (112) einschließt,
sich der erste gebogene Abschnitt (111) in der gleichen Richtung erstreckt wie eine Neigungsrichtung des geneigten Abschnitts (120A) und
der zweite gebogene Abschnitt (112) mit dem ersten gebogenen Abschnitt (111) verbunden und an der in der Reifenradialrichtung inneren Seite in Bezug auf den ersten gebogenen Abschnitt (111) angeordnet ist, so dass er sich in einer zu dem ersten gebogenen Abschnitt (111) entgegengesetzten Richtung erstreckt.

## Revendications

1. Bandage pneumatique radial pour charges lourdes (10), comprenant :
une bande de roulement (20A) comprenant des pavés (100, 200A) qui contactent une surface de la route (RS), les pavés (100, 200A) étant agencés dans des rangées de pavés s'étendant dans la direction circonférentielle du bandage pneumatique, chaque rangée de pavés comprenant une pluralité de pavés (100, 200A) agencés le long de la direction circonférentielle du bandage pneumatique, chacun des pavés (100) d'une première rangée de pavés parmi les rangées de pavés étant respectivement défini par des rainures dans la direction circonférentielle s'étendant dans la direction circonférentielle du bandage pneumatique, et des rainures dans la direction de la largeur s'étendant dans la direction de la largeur du bandage pneumatique, et chacun des pavés (200A) d'une deuxième rangée de pavés parmi les rangées de pavés étant formé au niveau des côtés externes, dans la direction de la largeur du bandage pneumatique, des pavés (100) de la première rangée de pavés, et étant défini par une rainure dans la direction circonférentielle s'étendant dans la direction circonférentielle du bandage pneumatique et des rainures dans la direction de la largeur s'étendant dans la direction de la largeur du bandage pneumatique ; et
une couche de ceinture de croisement (81) agencée au niveau d'un côté interne, dans une direction radiale du bandage pneumatique, par rapport aux pavés (100, 200A),
dans lequel :
une lamelle (110, 210A) s'étendant dans une direction de la largeur du bandage pneumatique est formée dans chaque pavé (100, 200A) pour définir des pavés plus petits ;
une partie inclinée (120, 220) est formée dans chaque pavé (100, 200A) sur une partie d'extrémité au niveau d'un côté de dégagement d'un pavé plus petit défini par la lamelle (110, 210A), au niveau de la transition entre l'extrémité radiale de la lamelle (110, 210A) et la surface de contact au sol du pavé plus petit ;
la partie inclinée (120, 220) est formée en chanfreinant la partie d'extrémité au niveau du côté de dégagement, de sorte à être inclinée vers l'intérieur, d'un côté externe, dans la direction radiale du bandage pneumatique, vers un côté interne, dans la direction radiale du bandage pneumatique ;
la partie inclinée (120, 220) est formée dans une région dans laquelle la couche de ceinture de croisement (81) est formée, dans la direction de la largeur du bandage pneumatique ; et
la partie inclinée (220) des pavés (200A) de la deuxième rangée de pavés est rétrécie vers le côté externe, dans la direction de la largeur du bandage pneumatique, et disparait au niveau de l'extrémité de la ceinture (Be) de la couche de ceinture de croisement (81).

2. Bandage pneumatique radial pour charges lourdes (10) selon la revendication 1, dans lequel un angle de la partie inclinée (120) par rapport à une bande de roulement (20A) des pavés (100) de la première rangée de pavés, dans une vue dans la direction de la largeur du bandage pneumatique, est ajusté dans un intervalle compris entre 15 degrés et 35 degrés.

3. Bandage pneumatique radial pour charges lourdes (10) selon la revendication 1 ou 2, dans lequel un rapport entre une longueur de la partie inclinée (120), dans la direction circonférentielle du bandage pneumatique, et une longueur des pavés (100) de la première rangée de pavés, dans la direction circonférentielle du bandage pneumatique, est ajusté dans un intervalle compris entre 2 % et 13 %.

4. Bandage pneumatique radial pour charges lourdes (10) selon l'une quelconque des revendications 1 à 3, dans lequel la lamelle (110A) des pavés (100) de la première rangée de pavés est formée en une forme en zigzag, de sorte que la lamelle (110A) est fléchie dans la direction circonférentielle du bandage pneumatique, vers un côté interne, dans la direction radiale du bandage pneumatique, dans une vue dans la direction de la largeur du bandage pneumatique.

5. Bandage pneumatique radial pour charges lourdes (10) selon la revendication 4, dans lequel, dans la vue dans la direction de la largeur du bandage pneumatique :
la lamelle (110A) des pavés (100) de la première rangée de pavés inclut une première partie fléchie (111) et une deuxième partie fléchie (112) ;
la première partie fléchie (111) s'étend dans une direction identique à une direction d'inclinaison de la partie inclinée (120A) ; et
la deuxième partie fléchie (112) est mise en communication avec la première partie fléchie (111) et est agencée au niveau du côté interne, dans la direction radiale du bandage pneumatique, par rapport à la première partie fléchie (111), de sorte à s'étendre dans une direction opposée à celle de la première partie fléchie (111).
